# EUROPEAN PATENT SPECIFICATION

(11) **EP 4 122 744 B1**
(45) Date of publication and mention of the grant of the patent: **27.05.2026**
(21) Application number: 21186369.1
(22) Date of filing: 19.07.2021
(51) Int. Cl.: B60L 1/04, B60L 1/00, B60L 50/60, B60L 55/00, B60L 58/24

(54) **A METHOD FOR CONTROLLING POWER TRANSFER FROM A GRID TO A VEHICLE**
VERFAHREN ZUR STEUERUNG DER ENERGIEÜBERTRAGUNG VON EINEM NETZ ZU EINEM FAHRZEUG
PROCÉDÉ DE COMMANDE DE TRANSFERT D'ÉNERGIE D'UN RÉSEAU ÉLECTRIQUE À UN VÉHICULE

(43) Date of publication of application: 25.01.2023
(73) Proprietor: VOLVO TRUCK CORPORATION, 405 08 Göteborg (SE)
(72) Inventor: BERNTSSON, Simon, 417 53 GÖTEBORG (SE)
(74) Representative: Kransell & Wennborg KB

(56) References cited:
- WO-A1-2017/083259
- CN-A- 106 033 901
- CN-A- 107 769 293
- CN-A- 108 928 249
- CN-A- 112 753 150
- JP-A- 2010 220 299
- US-A1- 2015 224 887
- US-A1- 2021 053 457
- US-B2- 9 401 610

## Description

### TECHNICAL FIELD

The present invention relates to a method for controlling power transfer from a grid to a rechargeable energy storage system, RESS, and/or an auxiliary load of the vehicle. The invention further relates to a power transferring system for controlling power transfer from a grid to a rechargeable energy storage system, RESS, and/or an auxiliary load of the vehicle, to a control unit and to a vehicle.

### BACKGROUND

A vehicle typically comprises an engine or machine for propelling the vehicle. The engine may be powered by various means, such as e.g. by a liquid or gaseous fuel in an internal combustion engine, or by electric power to an electric machine. Moreover, hybrid solutions exist in which e.g. the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the engine or machine for propelling the vehicle, as well as an auxiliary load. For example, for an electric vehicle the energy storage system may be a rechargeable energy storage system, RESS, comprising energy storage devices being batteries which are configured to operate the electric machine as well as electrically driven auxiliary equipment (auxiliary load). The batteries are periodically in need of charging and is then electrically connected to an electrical energy source, such as a grid or power grid. This is e.g. exemplified in CN112753150A. One common solution to charge the batteries is by a plug connected to the grid by an electrical wire or cable. Typically, the vehicle is parked in a parking/charging spot providing such charging means, and the driver or other person may manually plug the charging means into a socket of the vehicle, the socket being in electrical communication with the energy storage system and the batteries enabling charging of the same. Another solution to charge the battery is by a wireless charging system utilizing a power emitting coil and a power receiving coil configured to receive emitted electromagnetic radiation from the power emitting coil. US9401610B2 discloses charging control of electric vehicles connected to a grid, primarily aimed at optimizing grid load.

During charging, or whenever the vehicle is electrically connected to the grid, an auxiliary load of the vehicle may be in need of powering. The auxiliary load may then be connected to the grid and operated by power directly from the grid. However, a high or excessive power transfer may lead to component wear and component damages.

### SUMMARY

It is an object of the present invention to at least partly alleviate the shortcomings discussed above in relation to known energy storage systems, and to at least to some extent improve the operation of transferring power from the grid to the vehicle.

According to at least a first aspect of the present invention, a method for controlling power transfer from a grid to a rechargeable energy storage system, RESS, and/or an auxiliary load of the vehicle, via at least one intermediate power transfer component, is provided, as defined in claim 1. The method comprises:
- providing predicted operational information of the vehicle, the predicted operational information comprising a connected time period in which the vehicle is connected to the grid,
- providing component data comprising power transfer characteristic of the intermediate power transfer components, the component data including at least the critical temperature limit of the intermediate power transfer component, wherein the intermediate power transfer component comprises at least one of the following components: a junction box, a contactor, a charging switching unit, an on-board charger, a charging inlet, a cable,
- transferring power from the grid to the RESS and/or from the grid to the auxiliary load of the vehicle according to a power transfer model, wherein the power transfer model adapts the power transfer and a power transferring time from the grid during the connected time period in response to at least the component data, such that the temperature of the intermediate power transfer component is kept at least below the critical temperature limit wherein the power transfer model adapts the power transfer from the grid during the connected time period in response to the component data, such that the temperature of the intermediate power transfer component is kept in a lower temperature interval, or wherein the power transfer model adapts the power transfer from the grid during the connected time period in response to the component data, such that the temperature of the intermediate power transfer component is allowed to increase to a higher temperature interval, such that the power transferring time is kept at a minimum.

Hereby, the power transfer is adapted to the intermediate power transfer component and the power transfer characteristic thereof. Thus, power transfer from the grid to the RESS and/or from the grid to the auxiliary load of the vehicle is carried out using the power transfer characteristic of the intermediate power transfer component such that the temperature of the intermediate power transfer component is kept at least below the critical temperature limit. Thus, wear, typically electrical or thermal wear, or component damage related to the excessive temperatures of the intermediate power transfer component can be reduced or even avoided. That is, the power transfer model is configured to adapts the power transfer and a power transferring time from the grid during the connected time period in response to at least the component data, such that the temperature of the intermediate power transfer component is kept at least below the critical temperature limit. Thus, transferring power from the grid to the RESS and/or from the grid to the auxiliary load of the vehicle may be carried out such that the temperature of the intermediate power transfer component is kept at least below the critical temperature limit.

According to at least one example embodiment, the at least one intermediate power transfer component is a plurality of intermediate power transfer components, wherein each one of the power transfer components has a respective critical temperature limit. Thus, transferring power from the grid to the RESS and/or from the grid to the auxiliary load of the vehicle according to the power transfer model is performed such that the temperature of the intermediate power transfer components is kept at least below their respective critical temperature limit.

It should be understood that the connected time period in which the vehicle is connected to the grid may be referred to as a charging capability state of the RESS, as during this connected time period, the RESS may be charged if needed. The connected time period may e.g. occur during a non-operable state of the propelling engine of the vehicle, or at least a non-propelling state of the vehicle. That is, in such as state in which the vehicle is not powered for being propelled. The first time-period may e.g. be a hibernation, or stand-by, mode of the vehicle.

According to at least one example embodiment, the power transfer model is based on the component data. That is, in use, the power transfer model adapts the power transfer and a power transferring time from the grid during the connected time period based at least the component data.

According to at least one example embodiment, the power transfer model is a mathematical model. The power transfer model may e.g. comprise a thermal model, or heat transfer model, of the intermediate power transfer component(s), and the temperature of any one of the intermediate power transfer components can be determined or estimated based on the thermal model together with the power transfer and power transferring time. Such estimated temperature may then be compared to the component data of the intermediate power transfer component(s). The thermal model may typically utilize known temperature characteristics and/or known power transfer characteristic of the intermediate power transfer component(s) to estimate the temperature thereof. The ambient temperature may as well be used in determining the temperature of the intermediate power transfer component(s), and e.g. be used as input data to the thermal model.

According to at least one example embodiment, the power transfer model comprises the predicted operational information of the vehicle. Hereby, the power transfer model may adapt the power transfer and the power transferring time from the grid during the connected time period in response to at least the predicted operational information. Thus, the power transferring time may be included in the connected time period in an efficient manner. According to at least one example embodiment, the power transfer model enables a model predictive control of the power transfer.

According to at least one example embodiment, the grid is referred to as an external power source, i.e. a power source being external of the vehicle.

According to at least one example embodiment, wherein transferring power from the grid to the RESS is performed as charging, and the power transferring time from the grid to the RESS is referred to as charging time, and wherein transferring power from the grid to the auxiliary load is performed as auxiliary powering, and the power transferring time from the grid to the auxiliary load is referred to as auxiliary powering time, the method further comprising:
- setting at least one of the charging time and the auxiliary powering time based on the predicted operational information of the vehicle.

That is, at least one of the charging time and the auxiliary powering time is set in response to the predicted operational information of the vehicle. Stated differently, the predicted operational information of the vehicle is used as input data to determine the at least one of the charging time and the auxiliary powering time. Thus, at least one of the charging time and the auxiliary powering time is limited by the predicted operational information of the vehicle and the connected time period. Charging is typically carried out by charging at least one energy storage device, e.g. a battery, of the RESS.

According to at least one example embodiment, the power transfer (i.e. charging and/or auxiliary powering) is carried out during a sub time-period of the connected time period, wherein the sub time-period and the power transfer thereof, are adapted such that the temperature of the intermediate power transfer component is kept at least below the critical temperature limit. The sub time-period may thus be determined in response to the predicted operational information of the vehicle. The sub time-period may extend during at least over 10 %, or at least over 30 %, or at least over 50 %, or at least over 70 %, or at least over 90 %, or at least over 95 % of the connected time period.

For example, the predicted operational information of the vehicle may comprise predicted, known or scheduled route, e.g. comprising remaining distance to a target destination. As described before, the predicted operational information comprises the connected time period. The connected time period may e.g. comprise predicted, known or scheduled time for when the vehicle is to be connected to the grid, or being able to charge.

Thus, the power transfer from the grid to the RESS may be performed as charging or by a charging power transfer. Thus, the power transfer model may be configured to adapt the charging and the charging time from the grid during the connected time period in response to at least the component data, such that the temperature of the intermediate power transfer component is kept at least below the critical temperature limit. Correspondingly, the power transfer from the grid to the auxiliary load may be performed as auxiliary powering or auxiliary power transfer. Thus, the power transfer model may be configured to adapt the auxiliary powering and the auxiliary powering time from the grid during the connected time period in response to at least the component data, such that the temperature of the intermediate power transfer component is kept at least below the critical temperature limit. According to at least one example embodiment, the power transfer comprises charging power transfer and/or auxiliary power transfer. The charging power transfer and the auxiliary power transfer may at least partly overlap. That is, the step of transferring power from the grid to the RESS and from the grid to the auxiliary load of the vehicle may be carried out at least partly simultaneously. Stated differently, the charging time and the auxiliary powering time may at least partly overlap.

According to at least one example embodiment, the at least one intermediate power transfer component comprises, or consists of, at least one intermediate charging component.

According to at least one example embodiment, the predicted operational information of the vehicle comprises a predicted initialization time of propelling the vehicle ending the connected time period, wherein the power transferring time is set based on at least the predicted initialization time.

Thus, charging time and/or the auxiliary powering time may be set based on at least the predicted initialization time. Hence, as the predicted operational information comprises predicted initialization time of propelling the vehicle, the connected time period may be adapted accordingly. Moreover, the power transfer, i.e. the charging and auxiliary powering, may be adapted in response to the predicted initialization time. That is, the power transfer and power transferring time from the grid may be adapted in response to the predicted initialization time.

Alternatively, the predicted initialization time ending the connected time period is related to the initialization an operable state of the propelling engine of the vehicle.

According to at least one example embodiment, the power transferring time is set based on a user-input.

The user-input device may e.g. be a vehicle display or a user device, such as e.g. a mobile phone or tablet. Thus, the charging time and/or the auxiliary powering time may be set based on a user-input. Thus, a desired charging time and/or the auxiliary powering time may be set possibly together with a desired charging level and desired auxiliary load, respectively.

According to at least one example embodiment, the power transfer model adapts the power transfer from the grid during the connected time period in response to the component data, such that the temperature of the intermediate power transfer component is kept in a lower temperature interval.

Hereby, damage of the intermediate power transfer component as a result of high temperature can be reduced, or be kept limited. Thus, the life-time of the intermediate power transfer component can be improved. That is, the power transfer model is configured to adapt the power transfer from the grid during the connected time period in response to the component data, such that the temperature of the intermediate power transfer component is kept in a lower temperature interval. Typically, the power transferring time is set to be relatively long as the power transfer is typically set to relatively low, in order to keep the temperature of the intermediate power transfer component during power transfer in the lower temperature interval. Thus, a temperature of the intermediate power transfer component in the lower temperature interval may indicate a power transferring time which is higher compared to if the temperature of the intermediate power transfer component would be kept in a higher temperature interval. Thus, in order to keep the temperature of the intermediate power transfer component in the lower temperature interval, the power transferring time is allowed to increase, or extend, such that the desired temperature of the intermediate power transfer component can be met. According to at least one example embodiment, the power transferring time may extend during the majority, such as e.g. at least over 50 %, or at least over 60 %, or at least over 70 %, or at least over 80 %, or at least over 90 %, or at least over 95 %, or at least over 99 % of the connected time period. For example, a relatively low temperature of the intermediate power transfer component during power transfer, i.e. a temperature in the lower temperature interval, can be achieved if the connected time period can be kept long, e.g. by enabling the vehicle to be connected to the grid over a long time period, for example overnight. Thus, for embodiments related to charging the RESS, the power transfer model is configured to enable charging of the RESS such that the temperature of the intermediate power transfer component is kept in a lower temperature interval.

According to at least one example embodiment, each one of the intermediate power transfer components is configured to be operated within an operating temperature window extending from a lower temperature limit to an upper temperature limit, the latter being e.g. the critical temperature limit. Thus, for each one of the intermediate power transfer components, a lower temperature interval is an interval in the lower part of the operating temperature window, e.g. the lower 25 %, or lower 15 %, of the operating temperature window. Thus, the temperature of the respective intermediate power transfer component may be kept in the lower temperature interval of the corresponding operating temperature window.

According to at least one example embodiment, the power transfer model adapts the power transfer from the grid during the connected time period in response to the component data, such that the life-time of the intermediate power transfer component is optimized and/or maximized. That is, the power transfer model is configured to adapt the power transfer from the grid during the connected time period in response to the component data, such that the life-time of the intermediate power transfer component is optimized and/or maximized.

According to at least one example embodiment, the power transfer model adapts the power transfer from the grid during the connected time period in response to the component data, such that the power transferring time is kept at a minimum.

Hereby, a fast power transferring time (e.g. a fast charging) can be achieved while the critical temperature limit of the intermediate power transfer component is kept. This may e.g. be advantageous if the connected time period is limited. That is, the power transfer model is configured to adapt the power transfer from the grid during the connected time period in response to the component data, such that the power transferring time is kept at a minimum. Typically, the power transferring time is set to be relatively short as the power transfer is typically set to relatively high, in order to keep the power transferring time at a minimum. Thus, a temperature of the intermediate power transfer component may be kept in the higher temperature interval which indicates a power transferring time which is lower compared to if the temperature of the intermediate power transfer component would be kept in the lower temperature interval. Thus, in order to keep the power transferring time at a minimum, the temperature of the intermediate power transfer component is allowed to increase, at least up to the critical temperature limit, such that the desired power transferring time can be met. For embodiments in which the connected time period is limited, the power transferring time may extend during the majority, such as e.g. at least over 50 %, or at least over 60 %, or at least over 70 %, or at least over 80 %, or at least over 90 %, or at least over 95 %, or at least over 99 % of the connected time period. For example, a relatively high temperature of the intermediate power transfer component during power transfer, i.e. a temperature in the higher temperature interval, can be allowed if the connected time period is limited e.g. by enabling the fast-charging of the RESS. However, for embodiments in which the connected time period is not limited, or at least is allowed to extend for a relatively long time period, e.g. overnight, the power transferring time may extend during a minority, such as e.g. up to 50 %, or up to 40 %, or up to 30 %, or up to 20 %, or up to 10 %, or up to 5 %, or up to 1 % of the connected time period. Such choice may e.g. e dependent on the cost of electricity from the grid (spot price). Thus, for embodiments related to charging the RESS, the power transfer model is configured to enable charging of the RESS such that the charging time is kept at a minimum.

According to at least one example embodiment, the power transfer model adapts the power transfer from the grid during the connected time period in response to the component data, such that the temperature of the intermediate power transfer component is kept in a lower temperature interval, or such that the power transferring time is kept at a minimum.

According to at least one example embodiment, the power transfer model adapts the power transfer from the grid during the connected time period in response to the component data, in such a way that the power transfer is somewhere in between a scenario in which the temperature of the intermediate power transfer component is kept in a lower temperature interval, and a scenario in which the power transferring time is kept at a minimum.

According to at least one example embodiment, the power transfer model further adapts the power transferring time during the connected time period in response to the ambient temperature.

Hereby, a more accurate power transfer model may be achieved, as the ambient temperature may affect the temperature of the intermediate power transfer component and/or the power transferring time. That is, the power transfer model is configured to adapt the power transferring time during the connected time period in response to the ambient temperature.

According to the first aspect, the intermediate power transfer component comprises at least one of the following components: a junction box, a contactor, a charging switching unit, an on-board charger, a charging inlet, a cable.

According to a second aspect of the invention, a power transferring system for controlling power transfer from a grid to a rechargeable energy storage system, RESS, and/or an auxiliary load of the vehicle, via intermediate power transfer component, is provided, as defined in claim 7.

The power transferring system comprising: the intermediate power transfer component comprising at least one of the following components: a junction box, a contactor, a charging switching unit, an on-board charger, a charging inlet, a cable; and a control unit being configured to:
- provide predicted operational information of the vehicle, the predicted operational information comprising a connected time period in which the vehicle is connected to the grid,
- provide component data comprising power transfer characteristic of the intermediate power transfer component, the component data including at least the critical temperature limit of the intermediate power transfer component,
- transfer power from the grid to the RESS and/or from the grid to the auxiliary load of the vehicle according to a power transfer model, wherein the power transfer model adapts the power transfer and a power transferring time from the grid during the connected time period in response to at least the component data, such that the temperature of the intermediate power transfer component is kept at least below the critical temperature limit, wherein the power transfer model is configured to adapt the power transferring time during the connected time period in response to the component data, such that the temperature of the intermediate power transfer component is kept in a lower temperature interval, or wherein the power transfer model is configured to adapt the power transfer from the grid during the connected time period in response to the component data, such that the temperature of the intermediate power transfer component is allowed to increase to a higher temperature interval, such that the power transferring time is kept at a minimum.

Effects and features of the second aspect of the invention are largely analogous to those described above in connection with the first aspect of the invention. Embodiments mentioned in relation to the first aspect of the invention are largely compatible with the second aspect of the invention, of which some are exemplified below.

According to the invention, the power transferring system is configured to perform the method according to the first aspect of the invention.

According to at least one example embodiment, the power transferring system further comprises a user-input unit configured to receive a user-input of the power transferring time.

According to at least one example embodiment, the power transfer model is configured to adapt the power transferring time during the connected time period in response to the component data, such that the temperature of the intermediate power transfer component is kept in a lower temperature interval.

Additionally, or alternatively, the power transfer model is configured to adapt the power transfer from the grid during the connected time period in response to the component data, such that the power transferring time is kept at a minimum.

According to at least one example embodiment, the charging model adapts the charging time during the connected time period in response to the ambient temperature.

According to the second aspect, the power transferring system comprises the intermediate power transfer component such that the power transferring system is configured to transfer power from the grid to the RESS and/or the auxiliary load of the vehicle via the intermediate power transfer component, wherein the intermediate power transfer component comprises at least one of the following components: a junction box, a contactor, a charging switching unit, an on-board charger, a charging inlet, a cable.

According to a third aspect of the present invention, a control unit for a vehicle is provided. The control unit is configured to perform the method according to the first aspect of the invention.

Thus, the method may be carried out using a control unit, e.g. a vehicle onboard control unit. Moreover, the power transfer model may be stored in the control unit.

According to a fourth aspect of the present invention, a vehicle comprising a power transferring system according to the second aspect of the invention, or a control unit according to the third aspect of the invention, is provided.

According a fifth aspect of the present invention, a computer program is provided. The computer program comprises program code means for performing the method of the first aspect of the invention, when the program is run on a computer.

Such computer program may e.g. be implemented in a control unit, such as an ECU of the vehicle, e.g. the control unit according to the third aspect of the invention.

According to a sixth aspect of the present invention, a computer readable medium carrying a computer program comprising program code means for performing the method of the first aspect of the invention, when the program is run on a computer, is provided.

Effects and features of the third to sixth aspects of the invention are largely analogous to those described above in connection with the first and second aspects of the invention. Embodiments mentioned in relation to the first and second aspects of the invention are largely compatible with the third to sixth aspects of the invention.

The order of the method steps described in the present disclosure is not constrained to that described in the first aspect of the invention. One or several of the steps could switch places, or occur in a different order without departing from the scope of the invention. However, according to at least one example embodiment, the method steps are performed in the consecutive order described in the first aspect of the invention.

Further advantages and features of the present disclosure are disclosed and discussed in the following description and the accompanying drawings.

### BRIEF DESCRIPTION OF THE DRAWINGS

With reference to the appended drawings, below follows a more detailed description of embodiments of the invention cited as examples. In the drawings:
Fig. 1 is a side schematic view of a vehicle in accordance with an example embodiment of the invention;
Fig. 2 is a schematic view of a power transferring system for controlling power transfer from a grid to a rechargeable energy storage system, RESS, and/or an auxiliary load of the vehicle in accordance with an example embodiment of the invention;
Fig. 3 is a graph showing how the power transfer and power transferring time is set resulting in different temperatures of an intermediate power transfer component in accordance with an example embodiment of the invention; and
Fig. 4 is a flowchart illustrating the steps of a method in accordance with example embodiments of the invention.

### DETAILED DESCRIPTION OF EXAMPLE EMBODIMENTS OF THE INVENTION

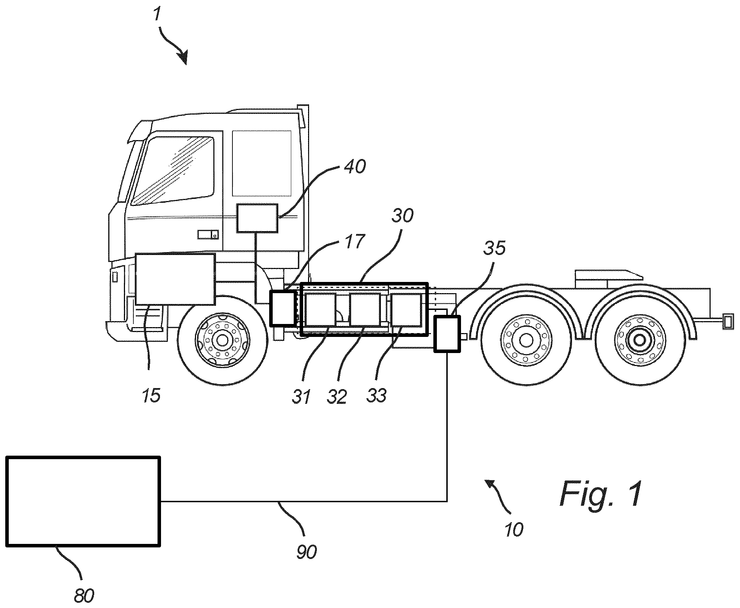

With reference to Fig. 1, a vehicle 1, here embodied as a heavy duty truck 1, is disclosed for which a method, a power transferring system 10, and/or a control unit 17 of a kind disclosed in the present invention is advantageous. However, the method, power transferring system 10 or control unit 17 may as well be implemented in other types of vehicles, such as in busses, light-weight trucks, passenger cars, marine applications (e.g. in a vessel) etc. The vehicle 1 is an electric vehicle, such as a full electric vehicle or a hybrid, comprising at least one electric machine 15, a rechargeable energy storage system, RESS, 30 comprising three energy storage devices 31, 32, 33, typically batteries, the RESS 30 being arranged and configured to power the electric machine 15. Moreover, the vehicle 1 comprises an auxiliary load 40 arranged and configured for being powered by the RESS 30, the auxiliary load 40 being e.g. a heater or a HVAC system. Thus, the RESS 30 is arranged and configured to supply at least two different loads 15, 40 with electric power, the first load being the electric machine 15, and the second load being the auxiliary load 40. The vehicle 1 typically further comprises other parts of the powertrain such as transmission, drive shafts and wheels (not shown in detail).

As seen in Fig. 1, the RESS 30 is connected to an electrical energy source, here being a power grid, or grid 80, via an energy transfer means 90, typically a cable for transferring electrical energy to the three energy storage devices 31, 32, 33 via a charging inlet 35. Thus, the charging inlet 35 is an example of an intermediate power transfer components facilitating the power transfer from the grid 80 (and/or the cable 90) to the RESS 30 and/or the auxiliary load 40. Hereby, the energy storage devices 31, 32, 33 may be charged with electrical energy. Furthermore, any one of the loads, such as e.g. the auxiliary load 40, may be powered directly via the grid 80.

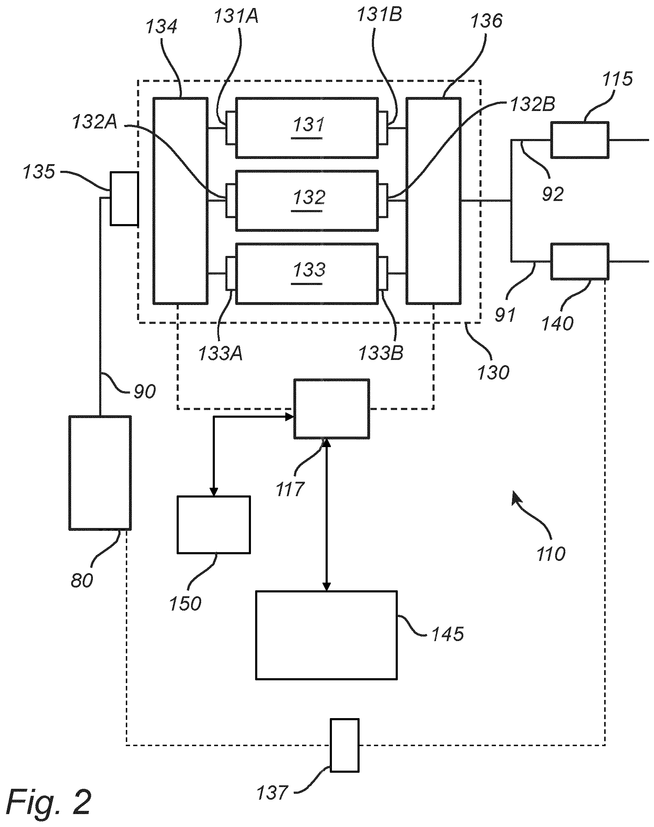

Fig. 2 is a schematic view of a power transferring system 110 for controlling power transfer from a grid 80 to a rechargeable energy storage system, RESS, 130 and/or an auxiliary load 140 of the vehicle. When transferring power from the grid 80 to the RESS 130 and/or the auxiliary load 140, power is transferred via a plurality of intermediate power transfer components, which will be described in the following. The embodiment shown in Fig. 2 may be implemented in the vehicle 1 of Fig. 1.

The energy storage system 130 is in Fig. 2 connected to two loads being e.g. an electric machine 115 and the auxiliary load 140 arranged and configured for being powered by the energy storage system 130 and the grid 80. Thus, the RESS 130 is connected to the grid 80, the grid 80 supplying electrical energy to the energy storage system 130 and/or the auxiliary load 140 via a cable 90 and a charging inlet 135. Moreover, in Fig. 2, the RESS 130 comprises three energy storage devices 131, 132, 133 or batteries 131, 132, 133 arranged in a parallel configuration, an energy source interface 134 providing an interface of the three energy storage devices 131, 132, 133 with the grid 80 (and/or cable 90), and a load interface 136 providing an interface of the three energy storage devices 131, 132, 133 with each one of the two loads 115, 140. The energy source interface 134 and/or load interface 136 may for example be comprised of, or comprise, a junction box and/or a charging switching unit. In more detail, each one of the energy storage devices 131, 132, 133 comprises a respective first contactor 131A, 132A, 133A for connection to the energy source interface 134 and the grid 80, and a respective second contactor 131B, 132B, 133B for connection to the load interface 136 and the loads 115, 140. The contactors 131A, 132A, 133A, 131B, 132B, 133B are only schematically illustrated as boxes in Fig. 2, and may according to at least one example embodiment be comprised in the energy source interface 134, and the load interface 136, respectively. In other words, the first contactors 131A, 132A, 133A may be comprised in the energy source interface 134 and the second contactors 131B, 132B, 133B may be comprised in the load interface 136. The contactors 131A, 132A, 133A, 131B, 132B, 133B may e.g. be arcing contactors or circuit breakers or another type of switches.

The a power transferring system 110 comprises a control unit 117, and is arranged and configured to control at least a part of the operation of the RESS 130 and the auxiliary load 140, and is in Fig. 2 schematically illustrated to be connected to the energy source interface 134 and the load interface 136. Hereby, the power transferring system 110 may e.g. be configured to control charging of any one of the energy storage devices 131, 132, 133, and/or powering of any one of the two loads 115, 140. The power transferring system 110 is further configured to enable powering of any one of the two loads 115, 140 by the grid 80, wherein electrical energy is transferred via the RESS 130 (with or without simultaneous charging of any one of the energy storage devices 131, 132, 133). Alternatively, the power transferring system 110 comprises a junction box 137 providing an electrical connection between the grid 80 and the auxiliary load 140 in parallel to the RESS 130. Optionally, the junction box 137 further comprises an electrical connection to the RESS 130 (i.e. instead of the cable 90 being directly coupled to the charging inlet 135 as shown in Fig. 2) via the charging inlet 135 (and any charging switch units or onboard charger).

The power transferring system 110 further comprises a predictive operation unit 145 configured to directly or indirectly provide predicted operational information of the vehicle to the control unit 117. In the embodiment of Fig, 2, a parameter providing unit 150 configured to provide parameter data, such as e.g. external parameter data, to the control unit 117 is also comprised in the power transferring system 110.

The control unit 117 is configured to provide predicted operational information of the vehicle, e.g. by receiving such information by the predictive operation unit 145. Thus, the predictive operation unit 145 may according to one example embodiment supply predicted operational information of the vehicle, e.g. as scheduled operational information of the vehicle. The predicted operational information of the vehicle comprises at least a connected time period in which the vehicle is connected to the grid 80. For example, the predicted operational information of the vehicle in the form of scheduled operational information may comprise scheduled operational load of the RESS 130, scheduled operation of the electric machine 115, scheduled operation of the auxiliary load 140 and scheduled time when the vehicle, or RESS 130, is connected to the grid 80 (i.e. said connected time period). Typically, the scheduled operation is as a function of time. Thus, the power transferring system 110 is at least configured to provide or receive predicted operational information of the vehicle, the predicted operational information comprising at least a connected time period in which the vehicle (or RESS 130) is connected to the grid 80.

Moreover, the control unit 117 is configured to provide component data comprising power transfer characteristic of at least one intermediate power transfer component, the component data including at least the critical temperature limit of the intermediate power transfer component. In Fig. 2, the intermediate power transfer components are for example the cable 90, the charging inlet 135, the energy source interface 134 and any junction box or charging switching unit which may be comprised in the energy source interface 134, the first contactors 131A, 132A, 133A, the second contactors 131B, 132B, 133B, the load interface 136 and any junction box or charging switching unit which may be comprised in the load interface 136, and any cable 91 connecting the RESS 130 with the auxiliary load 140. An intermediate power transfer component may be defined as any component between the electrical energy source (e.g. the grid 80, or the cable 90 used to transfer power from the grid 80 to the vehicle) and the power target, the latter being either one of the energy storage devices 131, 132, 133, and the auxiliary load 140. Thus, an intermediate power transfer component may be defined as being a power transfer component between the grid 80 (or the cable 90 used to transfer power from the grid 80) and the energy storage devices 131, 132, 133 or the auxiliary load 140 which is taking part in the process of transferring power, and/or a component which is transferring power from the grid 80 (or the cable 90 used to transfer power from the grid 80) to the energy storage devices 131, 132, 133 or the auxiliary load 140. Thus, the at least one intermediate power transfer component may comprise one or more of the previously mentioned examples.

Moreover, the control unit 117 is configured to control the power transfer from the grid 80 to the RESS 130 and/or from the grid 80 to the auxiliary load 140 according to a power transfer model. The power transfer model is typically comprised in the control unit 117. The power transfer model is configured to adapt the power transfer and a power transferring time from the grid 80 during the connected time period in response to at least the component data, such that the temperature of the intermediate power transfer component is kept at least below the critical temperature limit.

The control unit 117 may comprise, or be configured to implement, a thermal model, or heat transfer model, of the intermediate power transfer component(s), and the temperature of each one of the intermediate power transfer components can be determined or estimated based on the thermal model together with the power transfer and power transferring time. Such estimate temperature may then be compared to the component data of the intermediate power transfer components. The thermal model may typically utilize known temperature characteristics and/or known power transfer characteristic of the intermediate power transfer components to estimate the temperature thereof. That is, the control unit 117 typically comprises a computer program comprising program code means for at least executing the thermal model, and possibly storing the thermal model. The ambient temperature may as well be used in determining the temperature of the intermediate power transfer components, and e.g. be used as input data to the thermal model. For example, the parameter providing unit 150 may e.g. be a sensor, such as a temperature sensor, configured to measure the ambient temperature of the vehicle.

The predictive operation unit 145 may e.g. be integrated into a vehicle functionality, and/or may be a user-input device configured to enable a manual functionality of providing predicted operational information of the vehicle (e.g. scheduled operational information of the vehicle). That is, the predictive operation unit 145 may be a user-input unit 145 configured to receive a user-input of the power transferring time. The user-input device may e.g. be a vehicle display or a user device, such as e.g. a mobile phone or tablet. The predictive operation unit 145 can for example be a mobile app, in vehicle cluster or an offboard vehicle management system. However, it should be noted that the predictive operation unit 145 and the parameter providing unit 150 are optional. Thus, the predicted operational information of the vehicle may be provided from something else than the predictive operation unit 145, and the temperature estimate of the intermediate power transfer component may be provided without the input from the parameter providing unit 150.

With reference to Fig. 2, the following example procedure may be carried out when transferring power from the grid 80 to the RESS 130 and/or from the grid 80 to the auxiliary load 140.

A user (not shown) uses the predictive operation unit 145 to set the usage need of the vehicle. For example, the usage need includes information to when the vehicle is to be used, corresponding to a predicted initialization time of propelling the vehicle, or a scheduled initialization time, and for what the vehicle is to be used for, corresponding to e.g. a schedule operational load over time. Hereby, said connected time period for when the vehicle is to be connected to the grid 80 may be determined. For example, the user may set a planned or scheduled route, and/or desired destination, possibly together with scheduled auxiliary actions for using the auxiliary load 140. As an example, such usage need may be that the vehicle is to be utilized for performance driving at 08:00 tomorrow, directly thereafter driving on the highway to a first destination, and when reaching the first destination the vehicle will be connected to the grid for 30 minutes, and subsequently driving to a second destination, and when reaching the second destination, the vehicle will be connected to the grid 80 overnight. Thus, a respective connected time period at the first destination may be determined, and a respective connected time period at the second destination may be determined. Possibly, use of the auxiliary load 140, e.g. by means of PTO for auxiliary actions of performing work may be included the usage input. Depending on the level of details of the usage need, it may be used as input data to determine said connected time period(s), and/or it may be used directly to determine said connected time periods(s). For example, the usage need may be pre-processed, e.g. by including topography of the scheduled route, predicted road, traffic and/or weather conditions, and other internal or external parameters e.g. parameters of the RESS, parameters of the drive cycle and/or work cycle, parameters of the environment to the vehicle, to determine destination times and correspondingly said connected time period(s). Such pre-processing may be performed by the control unit 117.

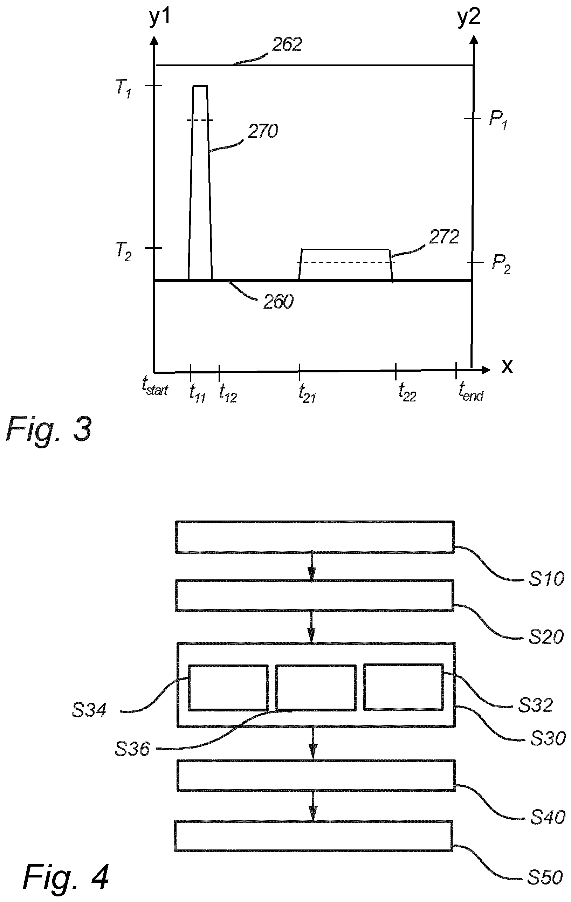

An example of how the power transfer and power transferring time is set resulting in different temperature of an intermediate power transfer component is presented in Fig. 3. Fig. 3 is a graph showing the temperature (y1-axis) and power transfer (y2-axis) as a function of time (x-axis). In the example in Fig. 3, the intermediate power transfer component is for example the inlet charger 135, which is typically only transferring power when the vehicle is connected to the grid 80. The intermediate power transfer component is operable in a temperature interval between a lower temperature limit 260 and an upper, or critical, temperature limit 262. In other words, component data of the intermediate power transfer component 135 comprises at least information of the upper, or critical, temperature limit 262. Corresponding to the usage need example given above, the vehicle initiates driving at tstart (08:00), directly thereafter drives on the highway to a first destination, and when reaching the first destination at time t11 the vehicle is connected to the grid for 30 minutes, i.e. up to the time t12. Thus, in the first connected time period between t11 and t12, the vehicle is connected to the grid 80 for a relatively short time. In this example, the vehicle is transferring power from the grid 80 to the RESS 130 during the first connected time period between t11 and t12, and is thus charging the energy storage devices 131, 132, 133 over a charging time. As the charging time is set to be relatively short, the transferred power (charging power) is adapted to be relatively high, represented by the dotted line at a level of a first power indication P1. That is, the power transfer model adapts the charging from the grid 80 during the first connected time period between t11 and t12 in response to the component data, such that the charging time is kept low, or at a minimum. Thus, the temperature 270 of the intermediate power transfer component 135 is kept in the higher temperature interval, here at the maximum temperature T1 slightly below the upper, or critical, temperature limit 262. Thus, as the charging time is low, the temperature 270 of the intermediate power transfer component 135 is allowed to be relatively high, at least up to the upper, or critical temperature limit 262. In the example of Fig. 3, the charging time is extending over the whole first connected time period between t11 and t12, but may alternatively extending during a majority, such as e.g. over at least 95 %, or at least over 99 % of the first connected time period between t11 and t12. Thus, the power transfer model may be configured to adapt the power transferring time during the first connected time period in response to the component data, such that the temperature of the intermediate power transfer component is kept in the lower temperature interval.

Subsequently, the vehicle drives to the second destination after t12. Thus the time t12 may represent a predicted initialization time of propelling the vehicle ending the first connected time period between t11 and tend. When reaching the second destination at time t21, the vehicle is connected to the grid 80 overnight, i.e. up to the time tend. Thus, a second connected time period between t21 and tend in which the vehicle is connected to the grid 80 is provided. The second connected time period is a relatively long time-period as it extends overnight, e.g. over at least 8 hours. In this example, the vehicle is transferring power from the grid 80 to the RESS 130 and is transferring power from the grid 80 to the auxiliary load 140, e.g. being a HVAC system. Thus, similar to during the first connected time period, charging of the energy storage devices 131, 132, 133 over a charging time is achieved. However, during the second connected time period, power is also transferred from the grid to the auxiliary load 140 by auxiliary powering over an auxiliary powering time. For example, charging may be performed prior to the auxiliary powering. Hereby charging of the energy storage devices 131, 132, 133 may be guaranteed prior to using the electrical energy to something else. Alternatively, charging and auxiliary powering are performed simultaneously. Hereby charging of the energy storage devices 131, 132, 133 may be performed simultaneously with operating the auxiliary load 140, e.g. in order to heat up the cabin of the vehicle. Hereafter in this example, the charging and auxiliary powering are commonly referred to as a power transfer over a power transferring time. As the power transferring time is set to be relatively long in the second connected time period, the transferred power (charging power and/or auxiliary power) is adapted to be relatively low, represented by the dotted line at a level of a second power indication P2. That is, the power transfer model adapts the power transfer from the grid 80 during the second connected time period between t21 and tend in response to the component data, such that the temperature 272 of the intermediate power transfer component 135 is kept in a lower temperature interval. Thus, the temperature of the intermediate power transfer component 135 is kept in the lower temperature interval, here at the maximum temperature T2 slightly above the lower temperature limit 260. Thus, in order to keep the temperature 272 of the intermediate power transfer component 135 in the lower temperature interval, the power transferring time is allowed to increase, or extend, such that the desired temperature of the intermediate power transfer component 135 can be met. In the example of Fig. 3, the power transferring time is extending from time t21 to the time t22 over only a portion of the second connected time period between t21 and tend. Thus, setting at least one of the charging time and the auxiliary powering time based on the predicted operational information of the vehicle. Thus, the power transfer model may be configured to adapt the power transfer from the grid during the second connected time period in response to the component data, such that the power transferring time is kept at a minimum.

Although only one intermediate power transfer component is exemplified in Fig. 3, more intermediate power transfer components as exemplified before may be used to adapt the power transfer from the grid. Thus, the intermediate power transfer component may be a plurality of intermediate power transfer components. The temperature adaptations of the intermediate power transfer components may then be determined as an average, or in relation to the most critical intermediate power transfer component, or in relation to the intermediate power transfer component being most sensitive to higher temperatures (i.e. having the lowest critical temperature limit). It should be noted that at least some of the intermediate power transfer components may be operated (i.e. transfer power) during operation of the vehicle, e.g. during propelling the vehicle. Thus, the temperature of such intermediate components may increase and decrease during vehicle operation depending on the usage thereof.

A method for controlling power transfer from a grid to a rechargeable energy storage system, RESS, and/or an auxiliary load of the vehicle, via at least one intermediate power transfer component, will now be described in more general terms with additional reference to Fig. 4. Fig. 4 is a flowchart describing the steps of such method. The method may e.g. be implemented in the control unit 117 of Fig. 2, and used in the vehicle 1 of Fig. 1.

In a first step S10, predicted operational information of the vehicle is provided. Such predicted operational information comprises at least a connected time period in which the vehicle is connected to the grid. The predicted operational information of the vehicle typically comprises a predicted initialization time of propelling the vehicle which ends the connected time period. Thus, the power transferring time may be set at least based on, or in response to, the predicted initialization time. The predicted operational information of the vehicle may for example be based on scheduled operational information of the vehicle, typically related to a usage need given by a user or by a system comprising scheduled information of the vehicle. Thus, the power transferring time is may be set based on, or in response to, a user-input. The scheduled operation of the vehicle may comprise a scheduled route of the vehicle comprising scheduled times when the vehicle is to be connected to the grid and possibly scheduled auxiliary actions of performing work during at least a portion of the scheduled route. Thus, the predicted operational information of the vehicle may be predicted in response to such scheduled route of the vehicle. The at least one intermediate power transfer component may be at least one of, or may comprise at least one of, the following components: a junction box, a contactor, a charging switching unit, an on-board charger, a charging inlet, a cable. The at least one intermediate power transfer component may be a plurality of intermediate power transfer components.

In a second step S20, component data comprising power transfer characteristic of the intermediate power transfer component is provided. The component data includes at least the critical temperature limit of the intermediate power transfer component.

In a third step S30, power from the grid to the RESS and/or from the grid to the auxiliary load of the vehicle is transferred according to a power transfer model. The power transfer model is configured to adapt the power transfer and a power transferring time from the grid during the connected time period in response to at least the component data, such that the temperature of the intermediate power transfer component is kept at least below the critical temperature limit. The power transfer model may adapt the power transferring time during the connected time period in response to the ambient temperature. Hence, the ambient temperature may be used as input when adapting the power transfer such that the temperature of the intermediate power transfer component is kept at least below the critical temperature limit.

In a first optional sub-step S32 to the third step S30, the step of transferring power from the grid to the RESS is charging. Thus, the power transferring time from the grid to the RESS is referred to as charging time. In a second optional sub-step S34 of the third step S30, the step of transferring power from the grid to the auxiliary load is auxiliary powering. Thus, the power transferring time from the grid to the auxiliary load is referred to as auxiliary powering time. In a third sub-step S36 of the third step S30, at least one of the charging time and the auxiliary powering time is set based on the predicted operational information of the vehicle.

In an optional fourth step S40, the power transfer model adapts the power transfer S30 from the grid during the connected time period in response to the component data such that the temperature of the intermediate power transfer component is kept in a lower temperature interval.

In an optional fifth step S50, carried out prior, after, or at least partly simultaneously with the fourth step S40, the power transfer model adapts the power transfer from the grid during the connected time period in response to the component data, such that the power transferring time is kept at a minimum.

It should be noted that the naming of the steps not necessarily, but might according to at least one example embodiment, relate to the order in which the steps are carried out, unless explicitly stated otherwise. One or more of the steps may be combined and carried out simultaneously. The control unit 117 of Fig. 2 may be configured to carry out one or several of the steps S10-S50.

It is to be understood that the present invention is not limited to the embodiments described above and illustrated in the drawings; rather, the skilled person will recognize that many changes and modifications may be made within the scope of the appended claims.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for controlling power transfer from a grid (80) to a rechargeable energy storage system, RESS, (30, 130) and/or an auxiliary load (40, 140) of a vehicle (1), via at least one intermediate power transfer component (35, 90, 91, 131A, 132A, 133A, 131B, 132B, 133B, 134, 135, 136, 137), the method comprising:
- providing (S10) predicted operational information of the vehicle, the predicted operational information comprising a connected time period in which the vehicle is connected to the grid,
- providing (S20) component data comprising power transfer characteristic of the intermediate power transfer component, the component data including at least the critical temperature limit (262) of the intermediate power transfer component, wherein the intermediate power transfer component comprises at least one of the following components: a junction box (137), a contactor (131A, 132A, 133A, 131B, 132B, 133B), a charging switching unit (134, 136), an on-board charger, a charging inlet (35, 135), a cable (90, 91),
- transferring (S30) power from the grid to the RESS and/or from the grid to the auxiliary load of the vehicle according to a power transfer model, wherein the power transfer model adapts the power transfer and a power transferring time from the grid during the connected time period in response to at least the component data, such that the temperature of the intermediate power transfer component is kept at least below the critical temperature limit, wherein the power transfer model adapts (S40) the power transfer from the grid during the connected time period in response to the component data, such that the temperature of the intermediate power transfer component is kept in a lower temperature interval, or wherein the power transfer model adapts (S50) the power transfer from the grid during the connected time period in response to the component data, such that the temperature of the intermediate power transfer component is allowed to increase to a higher temperature interval, such that the power transferring time is kept at a minimum.

2. The method according to claim 1, wherein transferring power from the grid to the RESS is performed as charging (S32), and the power transferring time from the grid to the RESS is referred to as charging time, and wherein transferring power from the grid to the auxiliary load is performed as auxiliary powering (S34), and the power transferring time from the grid to the auxiliary load is referred to as auxiliary powering time, the method further comprising:
- setting (S36) at least one of the charging time and the auxiliary powering time based on the predicted operational information of the vehicle.

3. The method according to any one of claims 1-2, wherein the predicted operational information of the vehicle comprises a predicted initialization time of propelling the vehicle ending the connected time period, and wherein the power transferring time is set based on at least the predicted initialization time.

4. The method according to any one of the preceding claims, wherein the power transferring time is set based on a user-input.

5. The method according to any one of the preceding claims, wherein the power transfer model further adapts the power transferring time during the connected time period in response to the ambient temperature.

6. A control unit (17, 117) for a vehicle (1), the control unit being configured to perform the method according to any one of claims 1-5.

7. A power transferring system (10, 110) for controlling power transfer from a grid (80) to a rechargeable energy storage system, RESS, (30, 130) and/or an auxiliary load (40, 140) of a vehicle (1), via at least one intermediate power transfer component (35, 90, 91, 131A, 132A, 133A, 131B, 132B, 133B, 134, 135, 136, 137), the power transferring system comprising: an intermediate power transfer component comprising at least one of the following components: a junction box (137), a contactor (131A, 132A, 133A, 131B, 132B, 133B), a charging switching unit (134, 136), an on-board charger, a charging inlet (35, 135), a cable (90, 91); and a control unit (17, 117) according to claim 6.

8. The power transferring system according to claim 7, further comprising a user-input unit (145) configured to receive a user-input of the power transferring time.

9. A vehicle (1) comprising a power transferring system (10, 110) according to any one of claims 7-8, or a control unit (17, 117) according to claim 6.

## Patentansprüche

1. Verfahren zum Steuern der Leistungsübertragung von einem Stromnetz (80) zu einem wiederaufladbaren Energiespeichersystem, RESS, (30, 130) und/oder einer Hilfslast (40, 140) eines Fahrzeugs (1) über mindestens eine Leistungsübertragungs-Zwischenkomponente (35, 90, 91, 131A, 132A, 133A, 131B, 132B, 133B, 134, 135, 136, 137), wobei das Verfahren Folgendes umfasst:
- Bereitstellen (S10) von vorhergesagten Betriebsinformationen des Fahrzeugs, wobei die vorhergesagten Betriebsinformationen einen Verbindungszeitraum umfassen, in dem das Fahrzeug mit dem Stromnetz verbunden ist,
- Bereitstellen (S20) von Komponentendaten, die ein Leistungsübertragungsmerkmal der Leistungsübertragungs-Zwischenkomponente umfasst, wobei die Komponentendaten mindestens die kritische Temperaturgrenze (262) der Leistungsübertragungs-Zwischenkomponente enthalten, wobei die Leistungsübertragungs-Zwischenkomponente mindestens eine der folgenden Komponenten umfasst: eine Anschlussdose (137), ein Schütz (131A, 132A, 133A, 131B, 132B, 133B), eine Ladeschalteinheit (134, 136), ein integriertes Ladegerät, einen Ladeeinlass (35, 135), ein Kabel (90, 91),
- Übertragen (S30) von Leistung vom Stromnetz zum RESS und/oder vom Stromnetz zur Hilfslast des Fahrzeugs gemäß einem Leistungsübertragungsmodell, wobei das Leistungsübertragungsmodell die Leistungsübertragung und eine Leistungsübertragungszeit vom Stromnetz während des Verbindungszeitraums in Ansprechen auf mindestens die Komponentendaten anpasst, so dass die Temperatur der Leistungsübertragungs-Zwischenkomponente mindestens unterhalb der kritischen Temperaturgrenze gehalten wird, wobei das Leistungsübertragungsmodell die Leistungsübertragung vom Stromnetz während des Verbindungszeitraums in Ansprechen auf die Komponentendaten anpasst (S40), so dass die Temperatur der Leistungsübertragungs-Zwischenkomponente in einem niedrigeren Temperaturbereich gehalten wird, oder wobei das Leistungsübertragungsmodell die Leistungsübertragung vom Stromnetz während des Verbindungszeitraums in Ansprechen auf die Komponentendaten anpasst (S50), so dass es ermöglicht wird, dass die Temperatur der Leistungsübertragungs-Zwischenkomponente in einen höheren Temperaturbereich ansteigt, so dass die Leistungsübertragungszeit auf ein Minimum beschränkt ist.

2. Verfahren nach Anspruch 1, wobei das Übertragen von Leistung vom Stromnetz zum RESS als Laden (S32) durchgeführt wird und die Leistungsübertragungszeit vom Stromnetz zum RESS als Ladezeit bezeichnet wird, und wobei das Übertragen von Leistung vom Stromnetz zur Hilfslast als Hilfsstromversorgung (S34) durchgeführt wird und die Leistungsübertragungszeit vom Stromnetz zur Hilfslast als Hilfsstromversorgungszeit bezeichnet wird, wobei das Verfahren ferner Folgendes umfasst:
- Festlegen (S36) mindestens einer der Ladezeit und der Hilfsstromversorgungszeit basierend auf den vorhergesagten Betriebsinformationen des Fahrzeugs.

3. Verfahren nach einem der Ansprüche 1-2, wobei die vorhergesagten Betriebsinformationen des Fahrzeugs eine vorhergesagte Initialisierungszeit für das Antreiben des Fahrzeugs umfassen, die den Verbindungszeitraum beendet, und wobei die Leistungsübertragungszeit basierend auf mindestens der vorhergesagten Initialisierungszeit festgelegt wird.

4. Verfahren nach einem der vorhergehenden Ansprüche, wobei die Leistungsübertragungszeit basierend auf einer Benutzereingabe festgelegt wird.

5. Verfahren nach einem der vorhergehenden Ansprüche, wobei das Leistungsübertragungsmodell ferner die Leistungsübertragungszeit während des Verbindungszeitraums in Ansprechen auf die Umgebungstemperatur anpasst.

6. Steuereinheit (17, 117) für ein Fahrzeug (1), wobei die Steuereinheit dazu konfiguriert ist, das Verfahren nach einem der Ansprüche 1-5 durchzuführen.

7. Leistungsübertragungssystem (10, 110) zum Steuern der Leistungsübertragung von einem Stromnetz (80) zu einem wiederaufladbaren Energiespeichersystem, RESS, (30, 130) und/oder einer Hilfslast (40, 140) eines Fahrzeugs (1) über mindestens eine Leistungsübertragungs-Zwischenkomponente (35, 90, 91, 131A, 132A, 133A, 131B, 132B, 133B, 134, 135, 136, 137), wobei das Leistungsübertragungssystem Folgendes umfasst: eine Leistungsübertragungs-Zwischenkomponente, die mindestens eine der folgenden Komponenten umfasst: eine Anschlussdose (137), ein Schütz (131A, 132A, 133A, 131B, 132B, 133B), eine Ladeschalteinheit (134, 136), ein integriertes Ladegerät, einen Ladeeinlass (35, 135), ein Kabel (90, 91); und eine Steuereinheit (17, 117) nach Anspruch 6.

8. Leistungsübertragungssystem nach Anspruch 7, das ferner eine Benutzereingabeeinheit (145) umfasst, die dazu konfiguriert ist, eine Benutzereingabe der Leistungsübertragungszeit zu empfangen.

9. Fahrzeug (1), das ein Leistungsübertragungssystem (10, 110) nach einem der Ansprüche 7-8 oder eine Steuereinheit (17, 117) nach Anspruch 6 umfasst.

## Revendications

1. Procédé de commande de transfert d'énergie d'un réseau (80) à un système de stockage d'énergie rechargeable, RESS (30, 130) et/ou à une charge auxiliaire (40, 140) d'un véhicule (1), via au moins un composant intermédiaire de transfert d'énergie (35, 90, 91, 131A, 132A, 133A, 131B, 132B, 133B, 134, 135, 136, 137), le procédé comprenant les étapes consistant à :
- fournir (S10) des informations de fonctionnement prédites du véhicule, les informations de fonctionnement prédites comprenant une période connectée pendant laquelle le véhicule est connecté au réseau,
- fournir (S20) des données de composant comprenant la caractéristique de transfert d'énergie du composant intermédiaire de transfert d'énergie, les données de composant comprenant au moins la limite de température critique (262) du composant intermédiaire de transfert d'énergie, le composant intermédiaire de transfert d'énergie comprenant au moins un des composants suivants : une boîte de jonction (137), un contacteur (131A, 132A, 133A, 131B, 132B, 133B), une unité de commutation de charge (134, 136), un chargeur embarqué, une entrée de charge (35, 135), un câble (90, 91),
- transférer (S30) de la puissance du réseau au RESS et/ou du réseau à la charge auxiliaire du véhicule selon un modèle de transfert d'énergie, le modèle de transfert d'énergie adaptant le transfert d'énergie et un temps de transfert d'énergie du réseau pendant la période connectée en réponse au moins aux données du composant, de sorte que la température du composant de transfert d'énergie intermédiaire soit maintenue au moins en dessous de la limite de température critique, le modèle de transfert d'énergie adaptant (S40) le transfert d'énergie à partir du réseau pendant la période connectée en réponse aux données du composant, de sorte que la température du composant de transfert d'énergie intermédiaire soit maintenue dans un intervalle de température inférieur, ou le modèle de transfert d'énergie adaptant (S50) le transfert d'énergie à partir du réseau pendant la période connectée en réponse aux données du composant, de sorte que la température du composant de transfert d'énergie intermédiaire puisse augmenter jusqu'à un intervalle de température plus élevé, de sorte que le temps de transfert d'énergie soit maintenu à un minimum.

2. Procédé selon la revendication 1, dans lequel le transfert d'énergie du réseau à la RESS est effectué sous forme de charge (S32), et le temps de transfert d'énergie du réseau à la RESS est appelé temps de charge, et dans lequel le transfert d'énergie du réseau à la charge auxiliaire est effectué sous forme d'une alimentation auxiliaire (S34), et le temps de transfert d'énergie du réseau à la charge auxiliaire est appelé temps d'alimentation auxiliaire, le procédé comprenant en outre l'étape consistant à :
- régler (S36) au moins un des temps de charge et de mise sous tension auxiliaire sur la base des informations de fonctionnement prévues du véhicule.

3. Procédé selon l'une quelconque des revendications 1 et 2, dans lequel les informations opérationnelles prédites du véhicule comprennent un temps d'initialisation prédit de propulsion du véhicule terminant la période connectée, et le temps de transfert d'énergie est établi sur la base d'au moins le temps d'initialisation prédit.

4. Procédé selon l'une quelconque des revendications précédentes, dans lequel le temps de transfert d'énergie est établi sur la base d'une entrée utilisateur.

5. Procédé selon l'une quelconque des revendications précédentes, dans lequel le modèle de transfert d'énergie adapte en outre le temps de transfert d'énergie pendant la période connectée en réponse à la température ambiante.

6. Unité de commande (17, 117) pour véhicule (1), l'unité de commande étant configurée pour exécuter le procédé selon l'une quelconque des revendications 1 à 5.

7. Système de transfert d'énergie (10, 110) destiné à commander le transfert d'énergie d'un réseau (80) à un système de stockage d'énergie rechargeable, RESS, (30, 130) et/ou à une charge auxiliaire (40, 140) d'un véhicule (1), via au moins un composant de transfert d'énergie intermédiaire (35, 90, 91, 131A, 132A, 133A, 131B, 132B, 133B, 134, 135, 136, 137), le système de transfert d'énergie comprenant : un composant de transfert d'énergie intermédiaire comprenant au moins un des composants suivants : une boîte de jonction (137), un contacteur (131A, 132A, 133A, 131B, 132B, 133B), une unité de commutation de charge (134, 136), un chargeur embarqué, une entrée de charge (35, 135), un câble (90, 91) ; et une unité de commande (17, 117) selon la revendication 6.

8. Système de transfert d'énergie selon la revendication 7, comprenant en outre une unité d'entrée d'utilisateur (145) configurée pour recevoir une entrée d'utilisateur du temps de transfert d'énergie.

9. Véhicule (1) comprenant un système de transfert d'énergie (10, 110) selon l'une quelconque des revendications 7 à 8, ou une unité de commande (17, 117) selon la revendication 6.
